# EUROPEAN PATENT APPLICATION

(11) **EP 3 499 387 A1**
(43) Date of publication of application: **19.06.2019**
(21) Application number: 17208142.4
(22) Date of filing: 18.12.2017
(51) Int. Cl.: G06F 17/30

(54) **ADDRESS RESOLUTION METHOD AND DEVICE TO A MULTIMEDIA CONTENT REFERENCED BY A COMPUTER LINK**

(71) Applicant: Nagravision S.A., 1033 Cheseaux-sur-Lausanne (CH)
(72) Inventor: THOMAS, Frédéric, 1203 Genève (CH)
(74) Representative: Ipside

(57) **Abstract**

The present invention relates to an access resolution method to a multimedia content (10) referenced by a computer link (20) associated with a digital information (30) displayable on a terminal device (40), said computer link (20) can be activated in view to reach a destination resource (50) through a computer network (60), wherein:
the computer link (20) comprises a signified (22) of the multimedia content (10), and the activation of said computer link (20) triggers:
- a comparison of said signified (22) to a plurality of series of metadata (73) stored in a database (70), each series of metadata (73) qualifying one multimedia content (10) and being associated with an addressing item (57) allowing to access to said multimedia content (10);
- a return of the addressing item (57) of each series of metadata (73) whose comparison reveals a match between said signified (22) and said metadata.

## Description

### INTRODUCTION

The present disclosure relates to the field of multimedia content referenced by a computer link, usually referred as URL (Uniform Resource Locator) or Hyperlink, and typically encompasses conditional access multimedia content accessed by activating such a link.

### BACKGROUND

Multimedia content may refer to video, movies, games, songs, press articles or any other publication, disclosure or digital content which can be rendered using a display screen and/or a speaker of a multimedia system. Such multimedia content can be accessed by directly activating the related digital files that materialize the content (e.g. in the case where these files are e.g. stored within the multimedia system), or can be indirectly accessed through an URL (or Hyperlink) which has to be firstly activated. The activation is typically obtained by clicking on the item, namely the file or the URL. Such an operation can be carried out either using the finger or an additional control device such as a computer mouse, a remote control or a stylus for example.

An URL is a character string embedding the required information to indicate, to a computer routine, how to access to the Internet resource to which the link is pointing. The URL is also referred to as a web address because it specifies the location of a web source on a computer network such as the Internet. For simplicity, a typical URL indicates the protocol (http), a hostname (e.g. www.movieservice.com), and a file name (e.g. titanic.vob). The hostname is like a mask placed on an IP address.

When the user activates such a link through a multimedia system, the browser of the multimedia system has to connect to the service provider which hosts the multimedia content. The connection is carried out using a network such as the Internet. The service provider can be regarded as a server located anywhere in the world. In order to play a movie on a multimedia system, the browser has to exchange data with the service provider (host) which hosts this movie. To this end, the multimedia system provides the host with some data regarding its browser (e.g. the version, language, operating system, etc), especially the IP address of the multimedia system and the requested content. In response, the service provider sends the appropriate data packets of the requested content to the IP address indicated in the request.

According to such a scheme, the URL leads to a single place where the related content should be found. However, some pointed resource no longer exists or has been moved. In such cases, the activating of the URL returns an error message due to the fact that the URL has become an obsolete link.

Another issue lies in the fact that the URL may point to a multimedia content requiring some conditions to be played by the multimedia system of the end-user. These conditions may relate to technical conditions (e.g. sufficient bandwidth, data rate, computing resources, etc...) or access conditions. For example, the multimedia content to which the URL is pointing may be hosted by a service provider which restricts the access to its database (i.e. to its multimedia content) to registered client devices only. Alternatively, some multimedia content of such a service provider may require specific access to be played. Accordingly, multimedia content requiring an access condition maybe referred to as conditional access multimedia content.

If the multimedia device is unable to provide the service provider with the requested access requirements, the URL is useless for the end-user in the same way as an obsolete link.

According to another example, some multimedia content need specific applications or software to be played or rendered in the same way that a pdf file may require software such as Adobe Acrobat in order to be opened. Similarly, if the multimedia device is not provided with the appropriate application or software, the URL pointing to a multimedia content requiring such an application/software is also useless for the end-user.

Accordingly, there is a need in providing a solution able to efficiently access to multimedia content referenced by computer link while overcoming, at least in part, the aforementioned drawbacks.

### SUMMARY OF THE PRESENT SOLUTION

To address this concern, the present disclosure proposes an access resolution method and device to a multimedia content referenced by a computer link. As a first main feature, the access to the multimedia content to which the computer link refers should not depend from a single service provider (host). This implies that the computer link must not point to a single host. As a second main feature, this access should comply with conditions imposed on the end-user's side, so as to almost ensure that the requested multimedia content should be accessible to the requester, preferably in the best conditions.

To this end, the present disclosure firstly proposes an access resolution method to a multimedia content referenced by a computer link. This computer link is associated with digital information displayable on a terminal device within a local area. The computer link can be activated to reach a destination resource of a computer network. According to the present solution, the computer link comprises a signified of the multimedia content assigned to the digital information and the activation of the computer link triggers:
- a comparison of the signified to a plurality of series of metadata stored in a database, each series of metadata qualifying a multimedia content and being associated with an addressing item allowing to access to the multimedia content; and
- a return (or a restitution) of the addressing item of each series whose comparison reveals a match between the signified and the metadata.

Advantageously, the computer link of the present solution can be regarded as a universal link which, instead of pointing to a single predefined destination, can be exploited to point to any destination enabling access to the requested multimedia content. Due to the fact that the addressing item of the computer link is not determined in advance, but has to be determined each time the link is activated, this computer link becomes advantageously dynamic and acquires a lasting character which, in particular, avoids pointing to obsolete resources. Furthermore, due to the fact that this computer link comprises a signified from which at least one addressing item can be obtained, this computer link is not restricted to provide a one-to-one relationship with the destination resource, but provides a one-to-many relationship. Accordingly, several destination resources can be obtained based on the activation of the same computer link, as better explained in the detailed description of the present solution.

It should also be noted that the present solution is not limited to a method, but also refers to a device for implementing the method according to any of its embodiments. Other advantages and embodiments will also be disclosed in the detailed description.

### BRIEF DESCRIPTION OF THE DRAWINGS

The solution and the embodiments suggested in the present disclosure should be taken as non-limitative examples and will be better understood with reference to the attached figures in which:
Fig. 1 schematically depicts an overview of the architecture in which the present method may be implemented together with data exchanges.
Fig. 2 illustrates a schematic representation of user criterion that may be used as additional conditional criterion for returning the addressing item.
Fig. 3 shows a variant of a computer link.
Fig. 4 schematically depicts an access resolution device for implementing the method.

### DETAILED DESCRIPTION

The following description refers both to a method and to a device. Although these two subject-matters are presented one after the other, it should be understood that any features disclosed in connection with the method may be applied, if any, to the device for implementing this method and vice-versa.

### Architecture

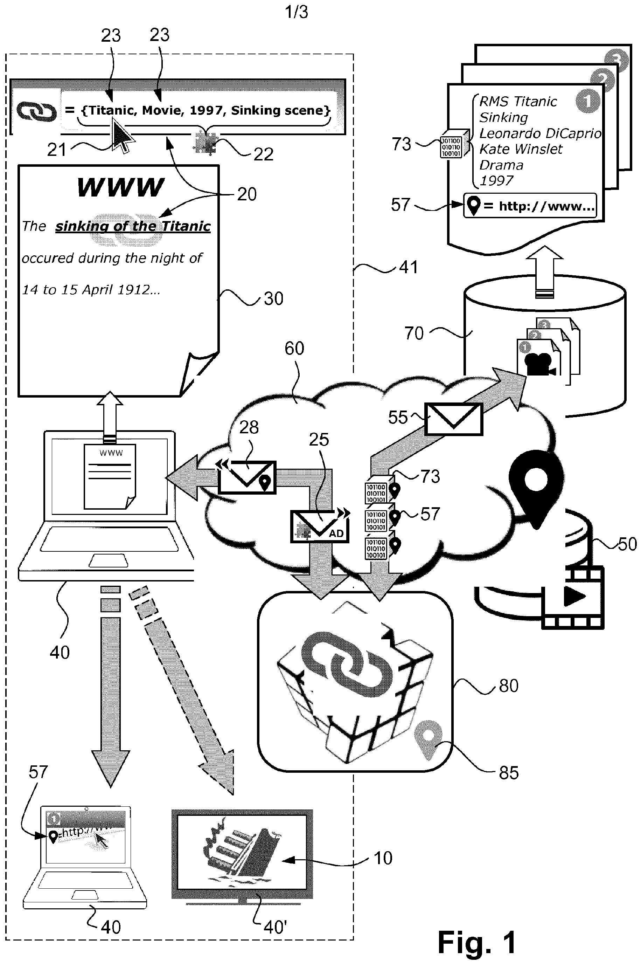

Fig. 1 schematically depicts the main entities involved in the present method and the main data exchanges between these main entities.

The method to which Fig. 1 refers is an access resolution method to a multimedia content 10. This multimedia content 10 is illustrated at the bottom of Fig. 1 using an image of the sinking of the Titanic. Accordingly, the sinking scene of the Titanic is taken as a concrete example for a better understanding of the present solution. Of course, the multimedia content may refer to any other kind of media or multimedia content that may be access through a computer link within a computer environment.

To this end, the multimedia content 10 is referenced by a computer link 20. This computer link is schematically depicted by two links of a chain in the upper part of Fig. 1. Common computer links of the prior art typically refer to URLs and hyperlinks, or to any other similar computer addressing mechanism. The computer link 20 can be regarded as an indication allowing to retrieve the multimedia content 10.

The computer link 20 is associated with a digital information 30 which is displayable on a terminal device 40 within a local area 41, such as the end-user area. In the present case, the digital information 30 is an electronic report published on a web page. According to the present example, this electronic report talks about the sinking of the Titanic. In this electronic report, the wording "sinking of the Titanic" is highlighted, e.g. using an underlined blue writing font. Such a way is commonly used to indicate that there is a computer link associated with this wording or to this digital information. Other way to signal the presence of a computer link may of course be used. In Fig. 1, this computer link is further signaled by a perceptible watermark illustrating the two links of a chain. The digital information 30 relates to any kind of information (text, logo, image, tweets, email, etc).

The computer link 20 can be activated typically by clicking on it, for example using a computer mouse, the finger or a stylus. Such an action is schematically depicted in Fig. 1 by an arrow cursor 21. The activation of the computer link 20 aims to reach a destination resource 50 via a computer network 60 such as the Internet for instance.

The destination resource 50 should be regarded as a target resource whose access can be identified by an addressing item 57 which is depicted by a black location symbol in Fig. 1. It should be noted that the present solution does not primarily seek to obtain the multimedia content 10, but most of all aims to provide a way allowing to get access to the multimedia content 10, more specifically via the destination resource 50 which hosts the multimedia content.

The addressing item 57 may be an URL, an hyperlink or any other means that provide the address of the destination resource or the path to reach such a destination resource. The destination resource 50 may typically be the multimedia content provider, e.g. a service provider or a web platform, such as YouTube or Netflix, which hosts the multimedia content 10. The latter may be hosted in the form of data files or data packets. Accordingly, the addressing item 57 provides information that indicates how to access to the multimedia content 10 and, therefore, the addressing item may also be referred to as content's addressing data.

According to the present solution, the computer link 20 comprises a signified 22 of the multimedia content 10. Nevertheless, the signified may also relate to the digital information 30 to which the multimedia content is assigned, although this is not the preferred solution. This signified defines the concept or idea evoked by the digital information, preferably by the multimedia content 10. In this latter case, the signified is a semantic content of the multimedia content which may be used as illustrative content of the digital information. Still preferably, the signified 22 in this case is made of keywords 23 that qualify the multimedia content 10. According to the example where the digital information relates to the sinking of the Titanic, the keywords 23 may refer, as shown in Fig. 1, to "Titanic", "Movie", "1997", "sinking scene", in particular if the multimedia content 10 relates to the movie of James Cameron, entitled "Titanic" issued in 1997 with Leonardo DiCaprio and Kate Winslet as main actors, especially regarding the scene of the sinking.

It should be noted that the term "keyword" is to be taken in a broad sense since it may include numerical data, special character or even group of words. For the sake of simplification, the signified 22 is schematically depicted by four assembled puzzle pieces in some of the attached Figures. Symbolically, each keyword 23 can therefore relate to one of the puzzle pieces.

### Steps and data exchanges

According to the present solution, the activation of the computer link 20 triggers the followings main steps.

The first main step aims to compare the signified 22 to a plurality of series of metadata 73 stored in a database 70. Each series of metadata 73 qualifies one multimedia content and is associated with an addressing item 57 allowing to access to this multimedia content, i.e. an addressing item 57 providing information on how to access to the multimedia content. Preferably, metadata of the aforementioned series comprises keywords similar to the keywords 23 of the signified 22. As their names suggest, such metadata are used to describe or qualify other data, especially data referring to multimedia content similar to the multimedia content 10. Such metadata may be derived e.g. from a brief description of the relevant multimedia content. However, such metadata may further comprise other data describing the multimedia content, such as the duration, the language(s), the caption(s) or technical data for instance.

Typically, the database 70 is a remote database located somewhere in the cloud illustrated by the computer network 60. The location of this database 70 is irrelevant, so that it may also be located at the same location than the destination resource 50 or elsewhere. As shown in Fig. 1, there is no requirement to store the series of metadata 73 together with the multimedia content to which these metadata refer. Nevertheless, the database 70 and the destination source 50 may also be located at the same place, for example to form a single entity. Preferably, the database 70 is a shared database which may be queried by many terminals similar to the terminal device 40.

The second main step aims to return the addressing item 57 of each series of metadata 73 whose comparison reveals a match between the signified 22 and the aforementioned metadata, i.e. the metadata of the aforementioned "each series of metadata 73". A match may occur depending on any predefined degree of correspondence or mapping between the signified 22 and the metadata. Accordingly, it may not be necessary for all the keywords 23 of the signified 22 to be retrieved, as such, in the series of metadata 73 of the database.

Several embodiments may be considered for returning the address item 57, namely for reproduce the address item 57 at the local area 41. According to one embodiment, the address item 57 may be displayed on the terminal device 40, as schematically illustrated in Fig. 1 as a subsequent or final step. The address item 57 may also be displayed as a link through a text, a graphic element or a picture instead of being directly displayed using its protocol (e.g. http://www...).

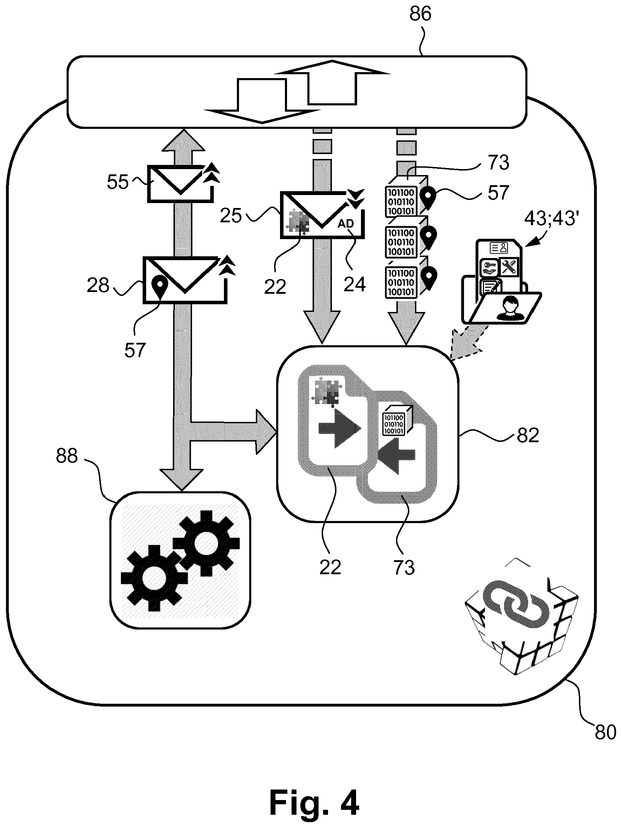

These two main steps may be performed by a so-called resolver 80 which can be regarded as an access resolution routine that can be installed on a dedicated device such as the terminal device 40 within the local area 41 or on a server located outside this local area 41. To cover these two possibilities, the resolver 80 of Fig. 1 has been schematically depicted in part in and out of this local area 41. According to one embodiment, the resolver is a computer routine that may be easily downloaded or installed on any terminal device 40. However, if the resolver needs strong computer resources, it may be better to use, as a resolver, a dedicated server whose access can be shared by numerous terminal devices 40. Such a resolver or dedicated server will be described in more details while referring to Fig. 4.

As mentioned, the signified 22 comprises at least a plurality of keywords 23 stored in conjunction with the digital information 30. In any case, it should be understood that, as such, the signified 22 is unable to provide any path for the destination resource. The signified 22 disclosed in the present solution provides the computer link 20 with a semantic nature or feature. It should be noted that the semantic nature of the signified 22, which constitutes the base of the computer link 20 of the present solution, must not be confused with some so-called "semantic links". Indeed, some URLs are referred to as "semantic links" due to the fact that that there are user-friendly URLs, namely URLs which are immediately and intuitively meaningful to non-expert users. However, such so-called "semantic links" remains URLs, namely a character string including the web address or web path allowing to reach the destination resource to which the link intends to point to. Typically, such so-called semantic URLs still begins with a protocol such as "http://....".

One of the main features of the present solution lies in the fact that the addressing item 57, that can be regarded as an URL pointing to the multimedia media content 10, is decoupled from the computer link 20 which refers to the multimedia content within the digital information 30. Indeed, the addressing item 57 is attached to the series of metadata 73 within the database 70, whereas the computer link 20 is stored in conjunction with the digital information 30 which may typically be hosted by a web hosting service which is separated from the database 70. The relationship between the computer link 20 and the appropriate addressing item 57 is obtained using the resolver 80. Accordingly, the resolver 80 plays a significant task given that it has to find the appropriate addressing item 57 from the signified 22.

Advantageously, this way ensures the computer link 20 will never point to an obsolete or non-existent destination resource. Indeed, it should be noted that in the computer link 20, more specifically in the signified 22, there is no address or path pointing to the multimedia content 10 or pointing to a destination service hosting the multimedia content 10. The addressing item 57 pointing to the multimedia content 10 must be determined (i.e. computed) using the computer link 20 and it is preferably determined each time the computer link 20 is activated. Accordingly, the computer link 20 should be regarded as a dynamic link instead of a static link such as a common URL.

Furthermore, thanks to its signified 22, the computer link 20 is advantageously not limited to point to a single address or patch (URL, hyperlink) leading to the desired multimedia content 10, but the same computer link 20 is able to return several addressing items 57, especially all the addressing items associated with series of metadata whose comparisons reveal a match between the signified 22 and the metadata of these series of metadata. Since the computer link 20 is based on a true semantic approach through the signified 22 (e.g. keywords 23 qualifying the multimedia content 10), the computer link 20 can be regarded as a powerful universal dynamic link with a perennial character.

### Other embodiments

According to one embodiment, the match (mapping) between the signified 22 and the series of metadata 73 is defined by a percentage of keywords 23 found in the metadata of the series of metadata 73. For instance, it could be considered that there is a match if at least 75% of the keywords 23, that constitutes the signified 22, are present in the metadata of a single series of metadata 73. In addition, the keywords do not necessarily have to be stored as such in the series of metadata, but one can merely consider that only the roots of these keywords 23 must at least be present. Of course, any other rule could be applicable to define if there is a match or not.

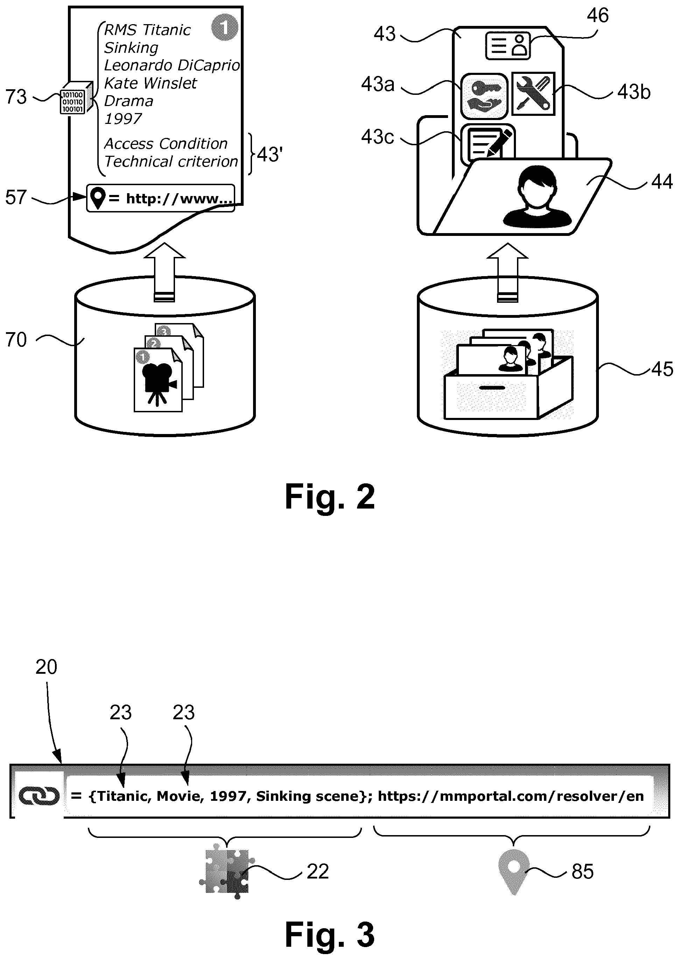

According to another embodiment shown in Fig. 2, the return of the addressing item 57 may further depend on at least one user criterion 43 which has to match with a predefined criterion 43. For example, such a predefined criterion 43' may be stored within the database 70, e.g. as part of metadata of the series of metadata 73 or in combination with such metadata. On the other hand, the at least one user criterion 43 may be stored on the user side, e.g. on the terminal device 40. In variant, the resolver may also be used to store, in one of its storage means, such at least one user criterion 43. Alternatively, the at least one user criterion 43 may be stored in a user criteria storage device 45 located anywhere in the cloud depicted by the computer network 60. In such a case, the user criteria storage device 45 may be especially configured to store user criteria 43 of many users or terminal devices 40.

As shown in Fig. 2, the user criterion 43 may relate e.g. to an access criterion 43a, to a technical criterion 43b and/or to a preference criterion 43c. All of these criteria may be stored e.g. in a record as a profile 44 dedicated to the end-user or to the terminal device 40. Each record or profile 44 can be further identified by an identifier 46 such as a unique user identifier or terminal identifier.

According to one embodiment, the user criterion 43 may regarded as additional criterion which has to be complied for returning the addressing item 57, e.g. if there is a match between the signified and the metadata. Accordingly, some of the user criteria 43, such as the access criterion 43a assigned to the end-user or its terminal device 40, may be used to limit the access of some multimedia content 10. For example, the metadata of a specific series of metadata 73 may comprise an access condition 43a' as predefined criterion 43' to comply in order to get access to the multimedia content 10, more specifically to get access to the addressing item 57 associated with the aforementioned series of metadata 73. Accordingly, if the access condition 43a' of the series of metadata 73 does not match or comply with the access criterion 43a of the user criterion 43, the resolver 80 may conclude that any match is automatically excluded. The access condition 43a' may relate e.g. to a specific subscription that the user must acquire in order to play multimedia content 10 assigned to a certain subscription level. If the end-user (or terminal device 40) does not have the required access criterion 43a to access to multimedia content 10 referenced under this specific subscription level, the access to the multimedia content 10 in question will be denied by preventing the return of the addressing item 57 associated with the denied multimedia content 10. The same approach may be applied to any of the user criteria 43 or to at least a part of the user criteria 43.

It should be noted that the access criterion 43a may depend on or refer to a geographical location, access right(s), age of the end-user, time parameter or counting parameter for instance. As example, the geographical location may refer to the location of the end-user or its terminal device 40, the access right may refer to rights assigned to the end-user or its terminal device 40 through a subscription to a service provider, the time parameter may limit the access to a multimedia content until a certain date or time interval, and the counting parameter may e.g. refer to the number of times that access to the same multimedia content is allowed.

The technical criterion 43b may depend on any technical parameter such as the bandwidth between the service provider (destination resource) and the terminal device 40, the screen size of the terminal device 40, its definition (e.g. SD, Full HD, 4K, 8K Ultra HD), the type of required peripheral devices or terminal device in order to properly play the multimedia content 10. The minimum required peripheral devices type (or minimum terminal device type) may be especially useful in the case where the multimedia content 10 refers to games such as those requiring a specific play stations or computer resources. As another example, some heavy multimedia content cannot be properly rendered on small terminals 10, e.g. on smartphones or tablet computers which may have limited computing resources. Finally technical criterion 43b may also refer to standards or content formats supported by the rendering device.

The preference criterion 43c may refer to user preferences such as a specific terminal device 40 in case where several terminal devices 40 would be available within the local area 41 to render or play the multimedia content 10. Of course, any other suitable preferences may be part of the preference criteria 43c.

According to another embodiment, the user criterion 43 is part of the profile 44 (e.g. referred to as user profile) and still preferably such a profile 44 is a pre-stored profile. Advantageously, instead of requesting the end-user to enter the user criteria 43 each time the comparison step (undertaken by the resolver 80) has to be achieved, these user criteria 43 may be advantageously stored in advance in such a pre-stored profile. Such a pre-stored profile can be established once, for example during an initialization phase or a registration stage, and may be re-used subsequently at will. Updating operations may be performed at any time in order to keep the pre-stored profile up to date.

According to a further embodiment, the returned addressing items 57 are sorted by a sorting process. In other words, the addressing items 57 of the series of metadata whose comparison reveal a match, are not returned (e.g. displayed on the terminal device 40) as they were found, but these addressing items are previously sorted, either to be returned in a specific order or to return only some specific addressing items 57, e.g. the addressing items 57 which meet the user criteria 43 or at least a part of the user criteria. Preferably, these addressing items 57 are sorted by the sorting process according to at least one of said at least one user criterion 43. According to one embodiment, the sorting process may be applied to any comparison which reveals a match between the signified and metadata of the series of metadata, especially in a case where these metadata do not comprise corresponding criteria 43'. Alternatively, the sorting process may be directly applied on the basis of user criteria 43 used as a required additional condition to have a match. In this case, the returned addressing items 57 may be already sorted by also taking into account the user criteria 43 (or at least one of them) as additional criteria to meet.

Advantageously, the sorting process allow to provide the user with a better result, namely with addressing items 57 which match with specific or personal criterion/criteria 43. For example, if the user or his terminal device 40 has no access to Netflix, there is no interest for the end-user to receive an addressing item 57 pointing to multimedia content 10 provided or hosted by Netflix or requiring a specific subscription to Netflix. Typically, such a requirement may be specified as an access condition 43a', for example within the metadata of the series of metadata which refers to the Netflix's multimedia content 10. If the user profile 44 does not comprise the required Netflix's access right as access criterion 43, the Netflix's multimedia content 10 will not be returned.

Another goal of the sorting process may to provide the returned addressing items 57 in a specific order, for example depending on the relevance, the type of multimedia content, the publication or release date, etc. The relevance may be determined in accordance to the percentage of matching keywords 23 between the signified and the metadata for example. According to another example, the type of multimedia content may be used to group e.g. the addressing items referring to a game, a movie or a digital publication all together, so that they are not mixed when they are e.g. displayed on the terminal device 40. As further example, the publication or release date may also be used to provide the returned addressing items 57 in a chronological way, so as to suggest recent addressing items first for instance.

According to one embodiment, the addressing item 57 is returned only after having checked its validity. Such a feature further aims to increase the reliability of the results by avoiding to suggest an addressing item that is no more valid, e.g. because it points to a resource which no longer exist or which has been moved. Such a feature may be implemented, for example using a specific sub-routine aiming to test if an error message is returned when the addressing item 57 is activated. In case of positive outcome, this addressing item can be defined as an obsolete link. Advantageously, any obsolete link may be automatically discarded before being returned to the end-user, e.g. before being displayed on the terminal device 40 or made accessible in any other way.

According to another embodiment, it should be opportune to automatically activate one of the returned addressing items 57, preferably the first addressing item 57 returned by the sorting process, which may be the most relevant addressing item found by the resolver 80 or sorted by the sorting process. Thanks to such a feature, the end-user does not need to further activate (e.g. to click on) the addressing item in order to reach the destination resource 50 or even to play the multimedia content 10. For example, the end-user may use the terminal device 40 (e.g. a computer or a tablet computer) as first terminal device for activating the computer link 20 from the digital information 30 and, thanks to a preference criterion 43c which may define a second terminal device 40' (e.g. a video projector or a TV system as shown in Fig. 1) as preferred or main rendering device, the most relevant multimedia content 10 may be automatically watched on such a second terminal device 40' (TV system) instead of the first terminal device 40.

As schematically depicted in Fig. 1, the activation of the computer link 20 may trigger sending a request 25 to the resolver 80 or the entity in charge of processing signifieds. Such a request 25 may at least comprise the signified 22 and a sender's addressing data. Sender's addressing data is referenced by the letters "AD" on the envelope representing the request 25 in Fig. 1 and is identified by the numeral reference 24 in Fig. 4. Sender's addressing data 24 may be a response address, typically an electronic address such as an IP address allowing to reach the terminal device 40 or the second terminal device 40'. Such a feature may be particularly useful in the case where the resolver 80 is not located within the local area 41 (e.g. in the terminal device 40), but it is located in a remote area, for example in a server linked to the computer network 60.

The request 25 may be automatically generated by the terminal device 40 and transmitted to the resolver 80 once the computer link 20 is activated. As soon as the resolver receives the request 25, it may process the signified by executing the comparison step aiming to compare the signified to a plurality of series of metadata 73 stored in the database 70 and returning a response 28 comprising the addressing item 57 of each series of metadata 73 whose comparison reveals a match at least between the signified 22 and the aforementioned metadata.

Depending on the embodiment, the addressing items 57 returned in the response 28 may be already sorted, typically if the sorting process is executed at the resolver 80, or may be unsorted items. In the latter case, either the unsorted items are simply displayed as such on the terminal device 40, or they are sorted before being displayed on the terminal device 40 if the sorting process is located within the local area 41, e.g. implemented in the terminal device 40. According to another embodiment, one of the addressing items 57, typically the most relevant item, is automatically activated by the terminal device 40 or the second terminal 40'.

If the resolver 80 is a remote entity, the terminal device 40 may be configured to automatically retrieve and select a resolver's addressing data 85, so as to properly send the request 25 to the appropriate resolver 80. To distinguish the resolver's addressing data 85 from the addressing items 57 in the attached Figures, the resolver's addressing data 85 has been illustrated using a grey location symbol, whereas the addressing item 57 is illustrated using a black location symbol.

The resolver's addressing data 85 may be configured in advance, e.g. as a setting parameter in the terminal device 40. If several resolvers 80 may be available, a preferred resolver's addressing data 85 may be defined in the terminal device 40, e.g. in the same way as a preferred web search engine may be defined in any terminal device 40.

According to another embodiment depicted in Fig. 3, the computer link 20 may further comprise the resolver's addressing data 85. It should be pointed out that the resolver's addressing data 85 should not be confused with the addressing data 57. Indeed, the goal of addressing data 57 is to provide a path or an address for reaching the destination resource 50 which host the multimedia content 10 or through which this multimedia content 10 can be obtained. In contrast, the goal of the resolver's addressing data 85 is merely to identify where the resolver 80 may be found.

Even if the computer link 20 comprises the resolver's addressing data 85 as shown in Fig. 3, this computer link 20 is still unable to provide any path for reaching the destination resource 57. In other words, the computer link 20 remains fully separated from the addressing item 57 which indicates where the multimedia content 10 is available.

### Device for implementing the method

As already mentioned, the implementation of the method disclosed in the present solution is achieved at least in part thanks to main steps that may typically be performed within resolver 80. Preferably, these steps concern at least the comparison and the return steps already discussed above.

To achieve these steps, the resolver 80 may be a computer routine, for example software or application that may be implemented within any computer device. Such a computer routine may consist in a computer file or computer data that may be stored using any storage medium (e.g. a data carrier such as a CD, DVD, USB-key, non-volatile memory card, etc).

According to another embodiment, the resolver 80 may be regarded as an access resolution device to a multimedia content 10, such as that schematically illustrated in Fig. 4. Such a device may be a server or a computer portal, typically located at a remote location with respect to the terminal device 40.

The access resolution device 80 depicted in Fig. 4 is configured to connect to the database 70, to compare the signified 22 to the plurality of series of metadata 73, and to return the addressing item 57 of each series of metadata whose comparison reveal a match.

To perform data exchanges, the access resolution device 80 is provided with a communication interface 86. Such a communication interface 86 may typically be configured to be connected to the computer network 60, so as to link the access resolution device 80 to any entity, such as the terminal device 40 and database 70, connected to the computer network 60. Data exchanged with the terminal device 40 mainly refer to the request 25 and the response 28. Data exchanged with the database 70 mainly refer to series of metadata 73 that are provided by the database to achieve the comparison stage at the access resolution device and/or to receive the addressing item(s) 57 of each series whose comparison reveals a match between the signified 22 and the metadata. As better shown in Fig. 1, data exchange with the database 70 may also refer to a resolver's request 55 sent by the access resolution device 80 to the database 70 for requesting access to the series of metadata 73, especially for achieving the comparison step.

According to one embodiment, the resolver's request 55 may also comprises the signified 22, e.g. the keywords 23 that have to be found in the series of metadata 73. In such a case, the comparison step aiming to compare the signified 22 (e.g. the keywords 23) to a plurality of series of metadata 73 may be achieved on the database side 70. Accordingly and still in such a case, the response to the resolver's request 55 may consist in the addressing item(s) 57 for which the associated series of metadata 73 matches with the signified 22. Alternatively, the relevant series of metadata 73 may be attached to the addressing item(s) 57 which are returned, by the database 70, as response to the resolver's request 25.

Depending on the embodiment, the communication interface 86 may also be used to exchange user criteria 43, for example with the user criteria storage device 45, and/or to receive the so-called predefined corresponding criteria/criterion 43', e.g. from the database 70.

According to one embodiment, it should be noted that the database 70 and the resolver or access resolution device 80 may be part of the same entity.

As schematically shown in Fig. 4, the comparison between the signified 22 and the series of metadata 73 is performed by a comparator 82. Such a comparator may comprise a comparison process that may further include comparison rules. Such rules may be used e.g. to set a minimum match level and/or to identify the roots of keywords to compare. According to one embodiment, the user criterion or criteria 43 may also be used by the comparator 82 for performing comparison(s) with the predefined criterion or criteria 43'. Alternatively, such comparison(s) may be achieved by a processor 88. Preferably, such a processor 88 will be used primarily for coordinating all the tasks which may be executed within the access resolution device 80. Nevertheless, the processor 88 may also be used to perform some tasks that are not executed by specific other entities of the access resolution device 80.

### Website or web platform

It should be noted that the resolver may also be regarded as a website or web platform that may used both for making the computer links 20 and for solving them using the present solution. The computer links 20 may be made e.g. by web designers using a first part of the website or web platform. A second part of this website or web platform may be used by the terminal devices 40 in order to resolve the computer link 20, i.e. to perform the access resolution method disclosed in the present solution according to any embodiment. Such a website or web platform may be private and/or public.

Making computer links 20 may be at least partially automated using an assistant process which may ask which multimedia content 10 (and which portion of the multimedia content if any) the web designer intends to reach through the computer link 20. The website or web platform may use a search engine and/or specific routine for retrieving keywords 23, for example from an abstract referring to the multimedia content. Alternatively, the multimedia content providers may also provide information to the website or web platform for making the signified 22, e.g. by providing abstracts of multimedia contents 10. These keywords 23 or at least some of them may be suggested to the web designer or may be automatically used to make the signified 22.

The content of the database 70 may be supplied by multimedia content providers, e.g. by providing the aforementioned abstracts of multimedia contents or directly by providing the metadata of the series of metadata 73 (or the series of metadata itself). Accordingly many series of metadata 73 may be collected by the database 70 as catalog of multimedia contents from content providers. The provided metadata of the series of metadata 73 may also comprise predefined criteria 43', especially technical criteria and/or access condition(s), and are of course provided with the associated addressing item 57.

### Final considerations

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. The Detailed Description, therefore, is not to be taken in a limiting sense, and the scope of various embodiments is defined only by the appended claims, along with the full range of equivalents to which such claims are entitled.

## Claims

1. Access resolution method to a multimedia content (10) referenced by a computer link (20) associated with a digital information (30) displayable on a terminal device (40) within a local area (41), said computer link (20) can be activated in view to reach a destination resource (50) through a computer network (60), wherein:
the computer link (20) comprises a signified (22) of the multimedia content (10), and the activation of said computer link (20) triggers:
- a comparison of said signified (22) to a plurality of series of metadata (73) stored in a database (70), each series of metadata (73) qualifying one multimedia content (10) and being associated with an addressing item (57) allowing to access to said multimedia content (10);
- a return of the addressing item (57) of each series of metadata (73) whose comparison reveals a match between said signified (22) and said metadata.

2. Method of claim 1, wherein the addressing item (57) is a Uniform Resource Locator or an Hyperlink.

3. Method of claim 1 or 2, wherein said signified (22) comprises at least a plurality of keywords (23) stored in conjunction with the digital information (30) and, as such, said signified (22) is unable to provide any path for reaching said destination resource (57).

4. Method of claim 3, wherein said match is defined by a percentage of keywords (23) found in the metadata of said series of metadata (73).

5. Method of any of preceding claims, wherein said return further depends on at least one user criterion (43) which has to match with a predefined criterion (43').

6. Method of claim 5, wherein said at least one user criterion (43) is at least one of an access criterion (43a), a technical criterion (43b) and a preference criterion (43c).

7. Method of claims 5 or 6, wherein said at least one user criterion (43) is part of a pre-stored profile (44).

8. Method of claim 6 or 7, wherein the returned addressing items (57) are sorted by a sorting process according to at least one of said at least one user criterion (43).

9. Method of any of preceding claims, wherein each addressing item (57) is returned only after having checked that the addressing item (57) is valid.

10. Method of any of preceding claims, wherein one returned addressing item (57) is automatically activated in order to access to said multimedia content (10).

11. Method of claim 10, wherein the activated addressing item (57) is the first addressing item returned by the sorting process.

12. Method of any of preceding claims, wherein the activation of said computer link (20) triggers sending a request (25) to a resolver (80) configured to process signifieds (22), said request (25) comprising at least said signified (22) and sender's addressing data (24).

13. Method of claim 12, wherein the computer link (20) further comprises resolver's addressing data (85) for reaching said resolver (80).

14. Method of any of claims 1 to 11, wherein said comparison and said return are carried out by a computer routine acting as resolver (80) within said local area (41) and configured to connect to said database (70) configured as shared database.

15. Access resolution device (80) to a multimedia content (10) referenced by a computer link (20) associated with a digital information (30), said computer link (20) can be activated to reach a destination resource (50) through a computer network (60), **characterized in that**:
- the computer link (20) is a signified (22) of the multimedia content (10),
- the access resolution device (80) is configured to connect to a database (70) storing a plurality of series of metadata (73), each series of metadata (73) qualifying a multimedia content (10) and being associated with an addressing item (57) allowing to access to said multimedia content (10),
- the access resolution device (80) is further configured to compare said signified (22) to the plurality of series of metadata (73) stored in the database (70) and to return the addressing item (57) of each series whose comparison reveals a match between said signified (22) and said metadata.
